# EUROPEAN PATENT SPECIFICATION

(11) **EP 3 054 556 B1**
(45) Date of publication and mention of the grant of the patent: **17.04.2019**
(21) Application number: 16162291.5
(22) Date of filing: 15.01.2010
(51) Int. Cl.: H02J 7/00, F41C 27/00, F41G 1/16, F41G 1/38, F41G 1/41, F41G 11/00, H02H 3/00, H02J 5/00

(54) **A FIREARM AND A METHOD FOR TRANSMITTING DATA TO AND FROM AN ACCESSORY**
FEUERWAFFE UND VERFAHREN ZUM SENDEN VON DATEN ZU UND VON EINEM ZUBEHÖR
ARME À FEU ET PROCÉDÉ POUR TRANSMETTRE DES DONNÉES VERS ET À PARTIR D'UN ACCESSOIRE

(43) Date of publication of application: 10.08.2016
(62) Divisional of application: 10842787.3
(73) Proprietor: COLT CANADA IP HOLDING PARTNERSHIP, Kitchener ON NC2 1J3 (CA)
(72) Inventor: COMPTON, David Walter, Kitchener Ontario N2E 2R4 (CA); CROCKER, Gary Edward, Kitchener Ontario N2A 4M5 (CA)
(74) Representative: Delorme, Nicolas

(56) References cited:
- WO-A1-2010/004470
- WO-A2-2008/108818
- WO-A2-2011/079233

## Description

### FIELD OF THE INVENTION

Embodiments of the invention relate generally to an inductively powering rail mounted on a device such as a firearm to provide power to accessories, such as: telescopic sights, tactical sights, laser sighting modules, and night vision scopes. Such a firearm is described in WO2010/004470 A.

### BACKGROUND OF THE INVENTION

Current accessories mounted on a standard firearm rail such as a MIL-STD-1913 rail, Weaver rail, or NATO STANAG 4694 accessory rail require that they utilize a battery contained in the accessory. As a result multiple batteries must be available to replace failing batteries in an accessory. Embodiments of the present invention utilize multiple battery power sources to power multiple accessories through the use of an induction system, mounted on a standard firearms rail.

### SUMMARY OF THE INVENTION

According to the invention, a firearm according to claim 1 and a method according to claim 6 are provided.

Preferred embodiments are disclosed in the dependent claims.

### BRIEF DESCRIPTION OF THE DRAWINGS

Embodiments of the present invention will now be described, by way of example only, with reference to the attached Figures, wherein:
Fig. 1 is a perspective view of an inductively powering rail mounted on a MIL- STD-1913 rail;
Fig. 2 is cross section vertical view of a primary U-Core and a secondary U-Core;
Fig. 3 is a longitudinal cross section side view of an accessory mounted to an inductively powering rail;
Fig. 4 is a block diagram of the components of one embodiment of an inductively powered rail system;
Fig. 5 is a block diagram of a primary Printed Circuit Board (PCB) contained within an inductively powering rail;
Fig. 6 is a block diagram of a PCB contained within an accessory;
Fig. 7 is a block diagram of the components of a master controller.
Fig. 8 is a flow chart of the steps of connecting an accessory to an inductively powering rail;
Fig. 9 is a flow chart of the steps for managing power usage; and
Fig. 10 is a flow chart of the steps for determining voltage and temperature of the system.

### DETAILED DESCRIPTION

Disclosed herein is a method and system for an inductively powering rail on a firearm to power accessories such as: telescopic sights, tactical sights, laser sighting modules, Global Positioning Systems (GPS) and night vision scopes. This list is not meant to be exclusive, merely an example of accessories that may utilize an inductively powering rail. The connection between an accessory and the inductively powering rail is achieved by having electromagnets, which we refer to as "primary U-Cores" on the inductively powering rail and "secondary U-Cores" on the accessory. Once in contact with the inductively powering rail, through the use of primary and secondary U-cores, the accessory is able to obtain power through induction. Embodiments avoid the need for exposed electrical contacts, which may corrode or cause electrical shorting when submerged, or subjected to shock and vibration. This eliminates the need for features such as wires, pinned connections or watertight covers.

Accessories may be attached to various fixture points on the inductively powering rail and are detected by the firearm once attached. The firearm will also be able to detect which accessory has been attached and the power required by the accessory.

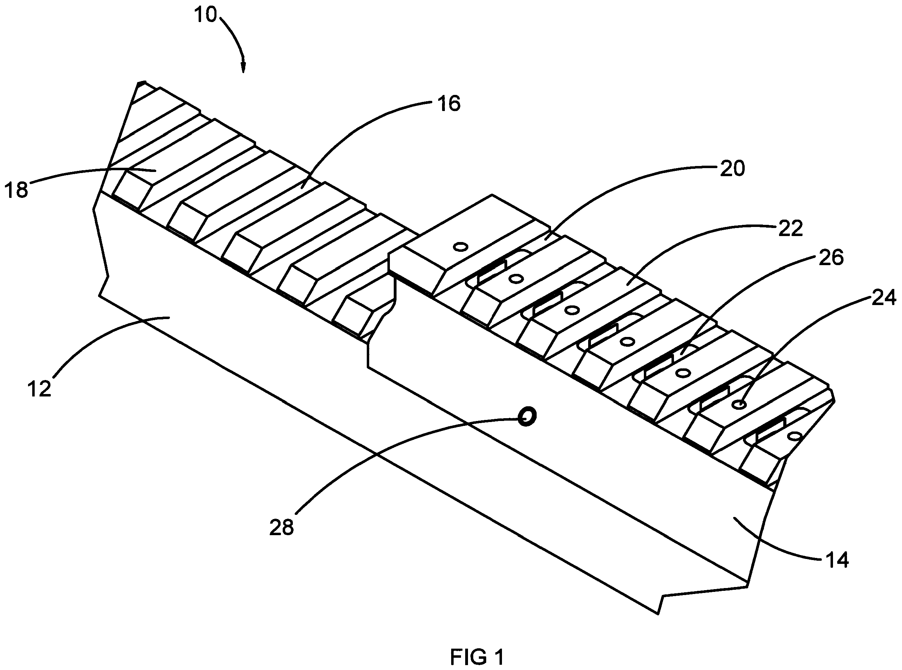

Referring now to FIG. 1, a perspective view of an inductively powering rail mounted on a MIL-STD-1913 rail is shown generally as 10.

Feature 12 is a MIL-STD-1913 rail, such as a Weaver rail, NATO STANAG 4694 accessory rail or the like. Sliding over rail 12 is an inductively powering rail 14. Rail 12 has a plurality of rail slots 16 and rail ribs 18, which are utilized in receiving an accessory. An inductively powering rail 14 comprises a plurality of rail slots 20, rail ribs 22 and pins 24, in a configuration that allows for the mating of accessories with inductively powering rail 14. It is not the intent of the inventors to restrict embodiments to a specific rail configuration, as it may be adapted to any rail configuration. The preceding serves only as an example of several embodiments to which inductively powering rail 14 may be mated. In other embodiments, the inductively powering rail 14 can be mounted to devices having apparatus adapted to receive the rail 14

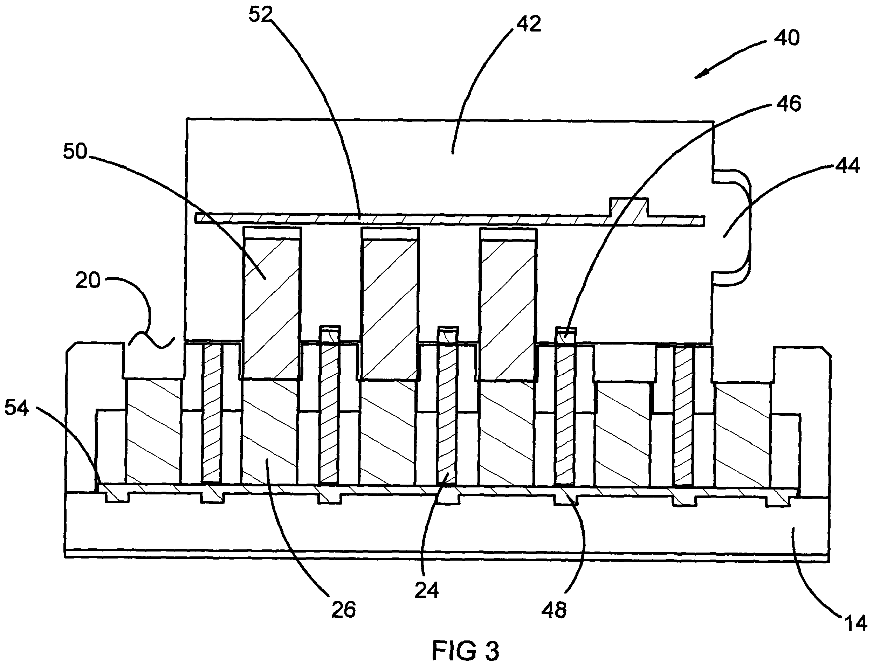

Pins 24 in one embodiment are stainless steel pins of grade 430. When an accessory is connected to inductively powering rail 14, pins 24 connect to magnets 46 and trigger magnetic switch 48 (see Figure 3) to indicate to the inductively powering rail 14 that an accessory has been connected. Should an accessory be removed the connection is broken and recognized by the system managing inductively powering rail 14. Pins 24 are offset from the centre of inductively powering rail 14 to ensure an accessory is mounted in the correct orientation, for example a laser accessory or flashlight accessory could not be mounted backward, and point in the user's face as it would be required to connect to pins 24, to face away from the user of the firearm. Pin hole 28 accepts a cross pin that locks and secures the rails 12 and 14 together.

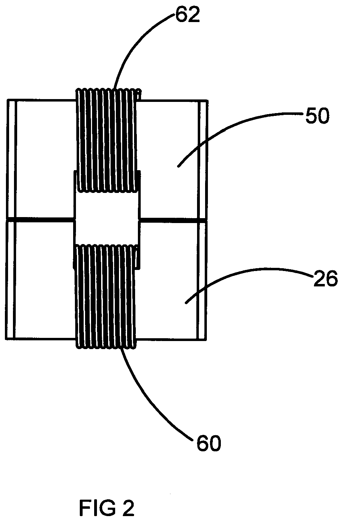

Referring now to FIG. 2, a cross section vertical view of a primary U-Core and a secondary U-Core is shown. Primary U-Core 26 provides inductive power to an accessory when connected to inductively powering rail 14. Each of primary U-core 26 and secondary U-core 50 are electromagnets. The wire wrappings 60 and 62 provide an electromagnetic field to permit inductive power to be transmitted bi-directionally between inductively powering rail 14 and an accessory. Power sources for each primary U-core 26 or secondary U-core 50 may be provided by a plurality of sources. A power source may be within the firearm, it may be within an accessory or it may be provided by a source such as a battery pack contained in the uniform of the user that is connected to the firearm, or by a super capacitor connected to the system. These serve as examples of diverse power sources that may be utilize by embodiments of the invention.

Referring now to FIG. 3, a longitudinal cross section side view of an accessory mounted to an inductively powering rail 14; is shown generally as 40. Accessory 42 in this example is a lighting accessory, having a forward facing lens 44. Accessory 42 connects to inductively powering rail 14, through magnets 46 which engage pins 24 and trigger magnetic switch 48 to establish an electrical connection, via primary PCB 54, to inductively powering rail 14.

As shown in FIG. 3, three connections have been established to inductively powering rail 14 through the use of magnets 46. In addition, three secondary U-cores 50 connect to three primary U-cores 26 to establish an inductive power source for accessory 42. To avoid cluttering the Figure, we refer to the connection of secondary U-core 50 and primary U-core 26 as an example of one such mating. This connection between U-cores 50 and 26 allows for the transmission of power to and from the system and the accessory. There may be any number of connections between an accessory 42 and an inductively powering rail 14, depending upon power requirements. In one embodiment each slot provides on the order of two watts.

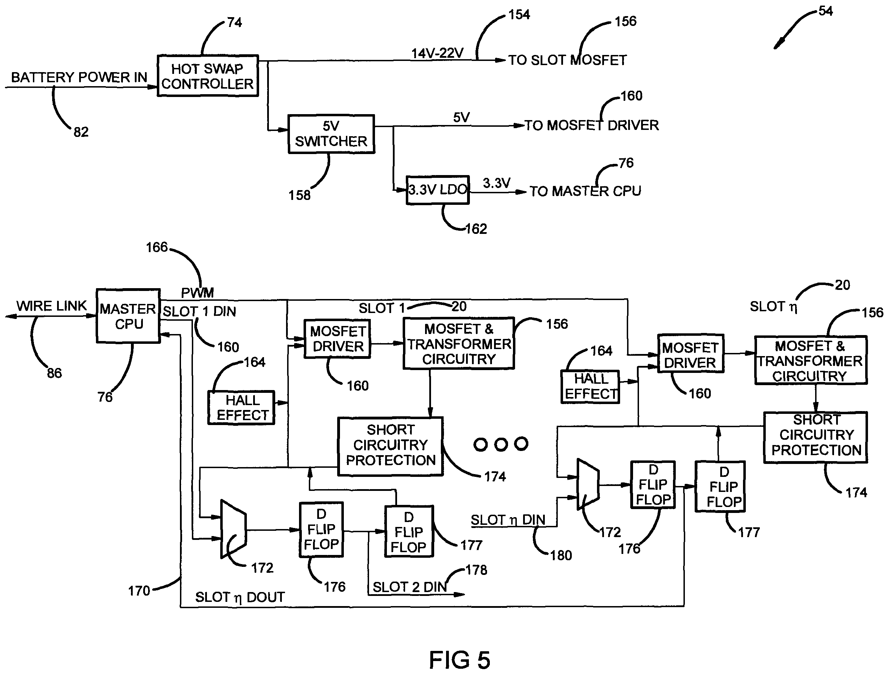

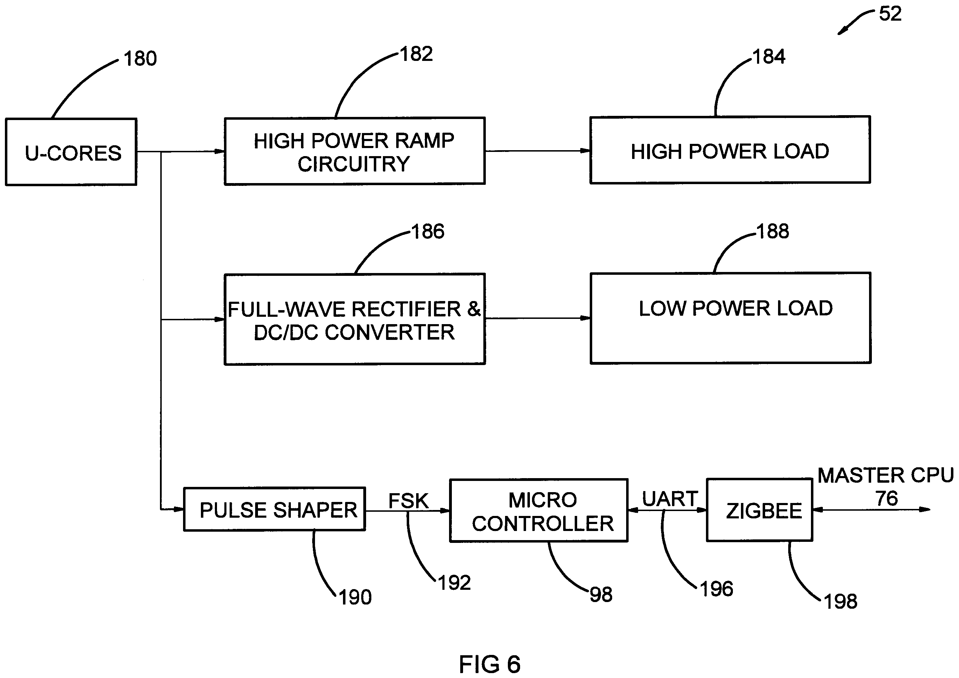

In both the accessory 42 and the inductively powering rail 14 are embedded Printed Circuit Boards (PCBs), which contain computer hardware and software to allow each to communicate with each other. The PCB for the accessory 42 is shown as accessory PCB 52. The PCB for the inductively powering rail 14 is shown as primary PCB 54. These features are described in detail with reference to FIG. 5 and FIG. 6.

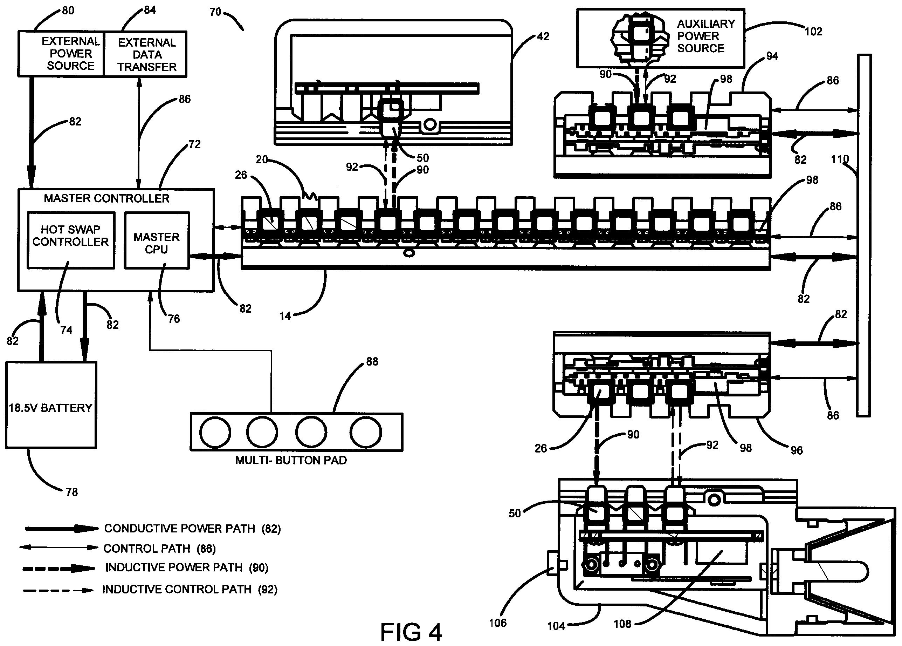

Referring now to FIG 4 a block diagram of the components of an inductively powered rail system is shown generally as 70.

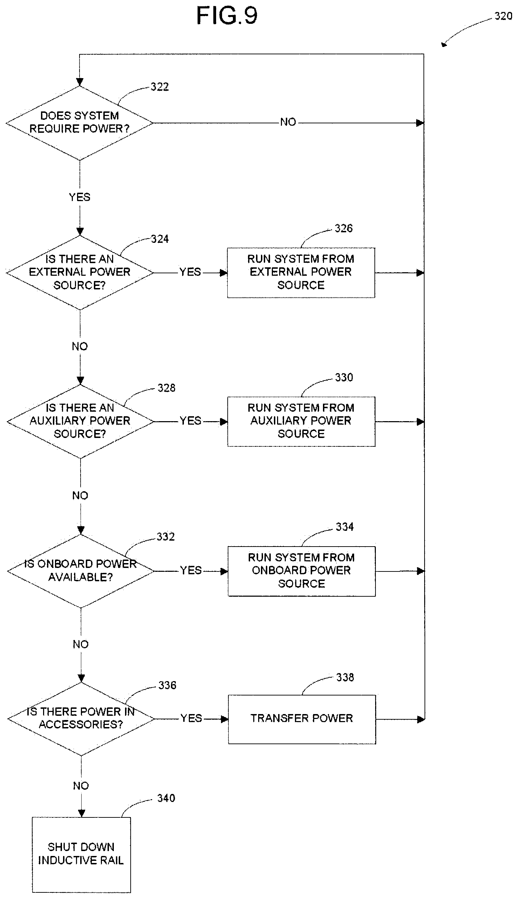

System 70 may be powered by a number of sources, all of which are controlled by master controller 72. Hot swap controller 74 serves to monitor and distribute power within system 70. The logic of power distribution is shown in FIG. 9. Hot swap controller 74 monitors power from multiple sources. The first in one embodiment being one or more 18.5V batteries 78 contained within the system 70, for example in the stock or pistol grip of a firearm. This voltage has been chosen as optimal to deliver two watts to each inductively powering rail slot 20 to which an accessory 42 is connected. This power is provided through conductive power path 82. A second source is an external power source 80, for example a power supply carried external to the system by the user. The user could connect this source to the system to provide power through conductive power path 82 to recharge battery 78. A third source may come from accessories, which may have their own auxiliary power source 102, i.e. they have a power source within them. When connected to the system, this feature is detected by master CPU 76 and the power source 102 may be utilized to provide power to other accessories through inductive power path 90, should it be needed.

Power is distributed either conductively or inductively. These two different distribution paths are shown as features 82 and 90 respectively. In essence, conductive power path 82 powers the inductively powering rail 14 while inductive power path 90 transfers power between the inductively powering rail 14 and accessories such as 42.

Master CPU 76 in one embodiment is a Texas Instrument model MSP430F228, a mixed signal processor, which oversees the management of system 70. Some of its functions include detecting when an accessory is connected or disconnected, determining the nature of an accessory, managing power usage in the system, and handling communications between the rail(s), accessories and the user.

Shown in FIG. 4 are three rails. The first being the main inductively powering rail 14 and side rail units 94 and 96. Any number of rails may be utilized. Side rail units 94 and 96 are identical in configuration and function identically to inductively powering rail unit 14 save that they are mounted on the side of the firearm and have fewer inductively powered rail slots 20. Side rail units 94 and 96 communicate with master CPU 76 through communications bus 110, which also provides a path for conductive power. Communications are conducted through a control path 86. Thus Master CPU 76 is connected to inductively powering rail 14 and through rail 14 to the microcontrollers 98 of side rails 94 and 96. This connection permits the master CPU 76 to determine when an accessory has been connected, when it is disconnected, its power level and other data that may be useful to the user, such as GPS feedback or power level of an accessory or the system. Data that may be useful to a user is sent to external data transfer module 84 and displayed to the user. In addition data such as current power level, the use of an accessory power source and accessory identification may be transferred between accessories. Another example would be data indicating the range to a target which could be communicated to an accessory 42 such as a scope.

Communications may be conducted through an inductive control path 92. Once an accessory 42, such as an optical scope are connected to the system, it may communicate with the master CPU 76 through the use of inductive control paths 92. Once a connection has been made between an accessory and an inductively powering rail 14, 94 or 96 communication is established from each rail via frequency modulation on an inductive control path 92, through the use of primary U-cores 26 and secondary U-Cores 50. Accessories such as 42 in turn communicate with master CPU 76 through rails 14, 94 or 96 by load modulation on the inductive control path 92.

By the term frequency modulation the inventors mean Frequency Shift Key Modulation (FSK). A rail 14, 94, or 96 sends power to an accessory 42, by turning the power on and off to the primary U-core 26 and secondary U-core 50. This is achieved by applying a frequency on the order of 40kHz. To communicate with an accessory 42 different frequencies may be utilized. By way of example 40kHz and 50kHz may be used to represent 0 and 1 respectively. By changing the frequency that the primary U-cores are turned on or off information may be sent to an accessory 42. Types of information that may be sent by inductive control path 92 may include asking the accessory information about itself, telling the accessory to enter low power mode, ask the accessory to transfer power. The purpose here is to have a two way communication with an accessory 42.

By the term load modulation the inventors mean monitoring the load on the system 70. If an accessory 42 decreases or increases the amount of power it requires then master CPU 76 will adjust the power requirements as needed.

Accessory 104 serves as an example of an accessory, being a tactical light. It has an external power on off switch 106, which many accessories may have as well as a safe start component 108. Safe start component 108 serves to ensure that the accessory is properly connected and has appropriate power before turning the accessory on.

Multi button pad 88 may reside on the firearm containing system 70 or it may reside externally. Multi button pad 88 permits the user to turn accessories on or off or to receive specific data, for example the distance to a target or the current GPS location. Multi-button pad 88 allows a user to access features the system can provide through external data transfer module 84.

Referring now to FIG 5 a block diagram of a primary Printed Circuit Board (PCB) contained within an inductively powering rail is shown as feature 54.

Power is received by PCB 54 via conductive power path 82 from master controller 72 (see FIG 4). Hot swap controller 74 serves to load the inductively powering rail 14 slowly. This reduces the amount of in rush current during power up. It also limits the amount of current that can be drawn from the inductively powering rail 14. Conductive power is distributed to two main components, the inductively powering rail slots 20 and the master CPU 76 residing on PCB 54.

Hot swap controller 74 provides via feature 154, voltage in the range of 14V to 22V which is sent to a MOSFET and transformer circuitry 156 for each inductively powering rail slot 20 on inductively powering rail 14.

Feature 158 is a 5V switcher that converts battery power to 5V for the use of

MOSFET drivers 160. MOSFET drivers 160 turn the power on and off to MOSFET and transformer circuitry 156 which provides the power to each primary U-Core 26. Feature 162 is a 3.3V Linear Drop Out Regulator (LDO), which receives its power from 5V switcher 158. LDO 162 provides power to master CPU 76 and supporting logic within each slot. Supporting logic is Mutiplexer 172 and D Flip Flops 176.

The Multiplexer 172 and the D Flip-Flops 176, 177 are utilized as a serial shift register. Any number of mulitplexers 172 and D Flip-Flops 176, 177 may be utilized, each for one inductively powered rail slot 20. This allows master CPU 76 to determine which slots are enabled or disabled and to also enable or disable a slot. The multiplexer 172 is used to select between shifting the bit from the previous slot or to provide a slot enable signal. The first D Flip Flop 176 latches the content of the Multiplexer 172 and the second D Flip-Flop 177 latches the value of D Flip-Flop 177 if a decision is made to enable or disable a slot.

Hall effect transistor 164 detects when an accessory is connected to inductively powering rail 14 and enables MOSFET driver 160.

Referring now to FIG. 6 a block diagram of a PCB contained within an accessory such as 42 is shown generally as 52. Feature 180 refers to the primary U-Core 26 and the secondary U-Core 50, establishing a power connection between inductively powering rail 14 and accessory 42. High power ramp circuitry 182 slowly ramps the voltage up to high power load when power is turned on. This is necessary as some accessories such as those that utilize XEON bulbs when turned on have low resistance and they draw excessive current. High power load 184 is an accessory that draws more than on the order of two watts of power.

Full wave rectifier and DC/DC Converter 186 rectifies the power from U-Cores 180 and converts it to a low power load 188, for an accessory such as a night vision scope. Pulse shaper 190 clamps the pulse from the U-Cores 180 so that it is within the acceptable ranges for microcontroller 98 and utilizes FSK via path 192 to provide a modified pulse to microcontroller 98. Microcontroller 98 utilizes a Zigbee component 198 via Universal Asynchronous Receiver Transmitter component (UART 196) to communicate between an accessory 42 and master controller 72. The types of information that may be communicated would include asking the accessory for information about itself, instructing the accessory to enter low power mode or to transfer power.

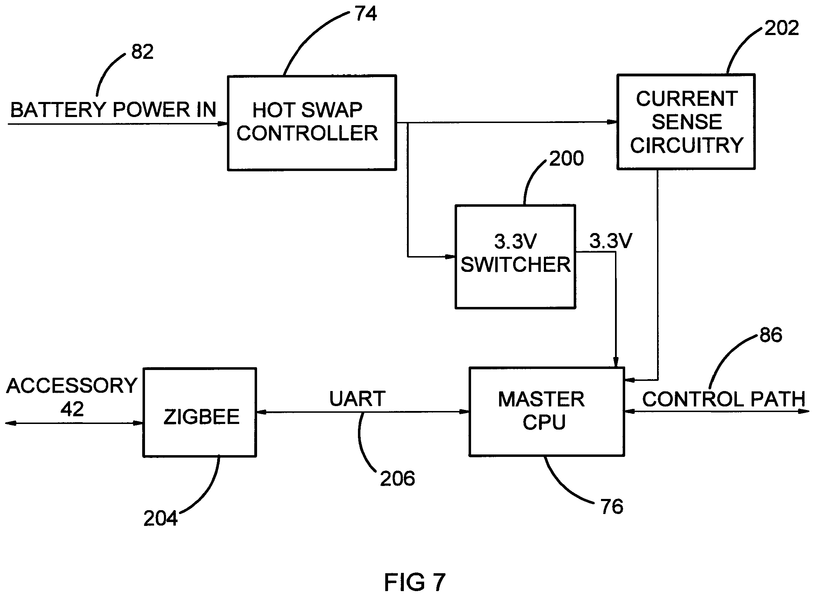

Referring now to FIG. 7, a block diagram of the components of a master controller 72 is shown (see FIG. 1) Conductive power is provided from battery 78 via conductive power path 82. Hot swap controller 74 slowly connects the load to the inductively powering rail 14 to reduce the amount of in rush current during power up. This also allows for the limiting of the amount of current that can be drawn. Feature 200 is a 3.3v DC/DC switcher, which converts the battery voltage to 3.3V to be used by the master CPU 76.

Current sense circuitry 202 measures the amount of the current being used by the system 70 and feeds that information back to the master CPU 76. Master controller 72 also utilizes a Zigbee component 204 via Universal Asynchronous Receiver Transmitter component (UART) 206 to communicate with accessories connected to the inductively powering rail 14, 94 or 96.

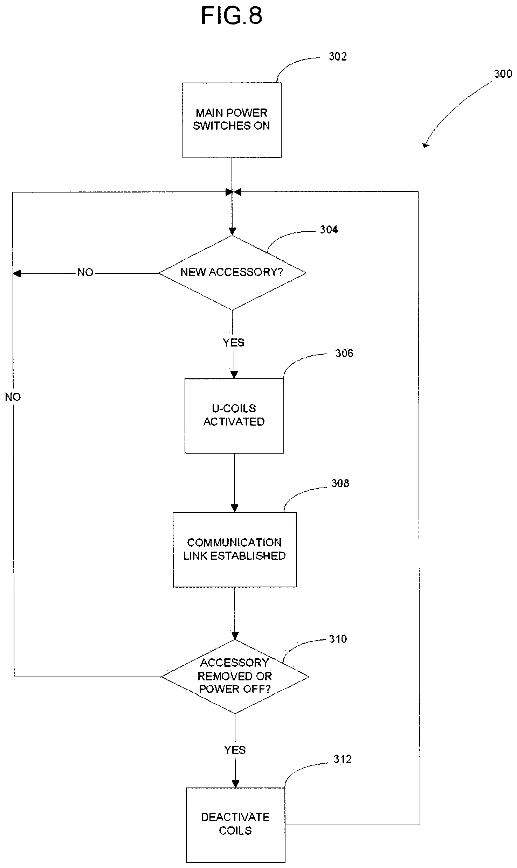

Before describing Figures 8, 9 and 10 in detail, we wish the reader to know that these Figures are flowcharts of processes that run in parallel, they each have their own independent tasks to perform. They may reside on any device but in one embodiment all would reside on master CPU 76. Referring now to Fig. 8, a flow chart of the steps of connecting an accessory to an inductively powering rail is shown generally as 300. Beginning at step 302, the main system power switch is turned on by the user through the use of multi-button pad 88 or another switch as selected by the designer. Moving next to step 304 a test is made to determine if an accessory, such as feature 42 of Fig. 4 has been newly attached to inductively powering rail 14 and powered on or an existing accessory 42 connected to inductively powering rail 14 is powered on. At step 306 the magnets 46 on the accessory magnetize the pins 24 thereby closing the circuit on the primary PCB 54 via magnetic switch 48 and thus allowing the activation of the primary and secondary U-cores 26 and 50, should they be needed. This connection permits the transmission of power and communications between the accessory 42 and the inductively powering rail 14 (see features 90 and 92 of Fig. 4).

Moving now to step 308 a communication link is established between the master CPU 76 and the accessory via control inductive control path 92. Processing then moves to step 310 where a test is made to determine if an accessory has been removed or powered off. If not, processing returns to step 304. If so, processing moves to step 312 where power to the primary and secondary U-Cores 26 and 50 for the accessory that has been removed.

Fig. 9 is a flow chart of the steps for managing power usage shown generally as 320. There may be a wide range of accessories 42 attached to an inductively powering rail 14. They range from low powered (1.5 to 2.0 watts) and high powered (greater than 2.0 watts). Process 320 begins at step 322 where a test is made to determine if system 70 requires power. This is a test conducted by master CPU 76 to assess if any part of the system is underpowered. This is a continually running process. If power is at an acceptable level, processing returns to step 322. If the system 70 does require power, processing moves to step 324. At step 324 a test is made to determine if there is an external power source. If so, processing moves to step 326 where an external power source such as 80 (see Fig. 4) is utilized. Processing then returns to step 322. If at step 324 it is found that there is no external power source, processing moves to step 328. At step 328 a test is made to determine if there is an auxiliary power source such as feature 102 (see Fig. 4). If so processing moves to step 330 where the auxiliary power source is utilized. Processing then returns to step 322. If at step 328 it is determined that there is no auxiliary power source, processing moves to step 332. At step 332 a test is made to determine if on board power is available. On board power comprises a power device directly connected to the inductively powering rail 14. If such a device is connected to the inductively powering rail 14, processing moves to step 334 where the system 70 is powered by on board power. Processing then returns to step 322. If at step 332 no on board power device is located processing moves to step 336. At step 336 a test is made to determine if there is available power in accessories. If so, processing moves to step 338 where power is transferred to the parts of the system requiring power from the accessories. Processing then returns to step 322. If the test at step 336 finds there is no power available, then the inductively powering rail 14 is shut down at step 340.

The above steps are selected in an order that the designers felt were reasonable and logical. That being said, they do not need to be performed in the order cited nor do they need to be sequential. They could be performed in parallel to quickly report back to the Master CPU 76 the options for power.

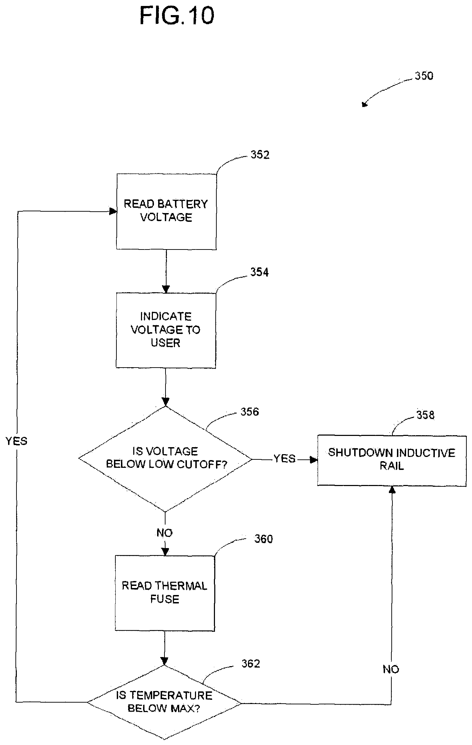

Figure 10 is a flow chart of the steps for determining voltage and temperature of the system, shown generally as 350. Beginning at step 352 a reading is made of the power remaining in battery 78. The power level is then displayed to the user at step 354. This permits the user to determine if they wish to replace the batteries or recharge the batteries from external power source 80. Processing moves next to step 356 where a test is made on the voltage. In one embodiment the system 70 utilizes Lithium-Ion batteries, which provide near constant voltage until the end of their life, which allows the system to determine the decline of the batteries be they battery 78 or batteries within accessories. If the voltage is below a determined threshold processing moves to step 358 and system 70 is shut down. If at step 356 the voltage is sufficient, processing moves to step 360. At this step a temperature recorded by a thermal fuse is read. Processing then moves to step 362, where a test is conducted to determine if the temperature is below a specific temperature. Lithium-Ion batteries will typically not recharge below -5 degrees Celsius. If it is too cold, processing moves to step 358 where inductively powering rail 14 is shut down. If the temperature is within range, processing returns to step 352.

With regard to communication between devices in system 70 there are three forms of communication, control path 86, inductive control path 92 and Zigbee (198, 204). Control path 86 provides communications between master CPU 76 and inductively powered rails 14, 94 and 96. Inductive control path 92 provides communication between an accessory such as 42 with the inductively powered rails 14, 94 and 96. There are two lines of communication here, one between the rails and one between the accessories, namely control path 86 and inductive control path 92. Both are bidirectional. The Zigbee links (198, 204) provide for a third line of communication directly between an accessory such as 42 and master CPU 76.

The above-described embodiments of the invention are intended to be examples only. Alterations, modifications and variations can be effected to the particular embodiments by those of skill in the art without departing from the scope of the invention, which is defined solely by the claims appended hereto.

## Claims

1. A firearm for transmitting data to and from an accessory (42, 102, 104) ;
the firearm comprising a master CPU (76) connected to a inductively powering rail (14), **characterized in that** the master CPU is further connected to a microcontroller (98) of an inductively powering side rail units (94, 96), said side rail units (94,96) communicating with master CPU (76) though a communication bus (110) permitting the master CPU (76) to determine at least one of the information data of the group consisting of: when an accessory has been connected, when it is disconnected; GPS feedback; data sent to an external data transfer
module (84) and displayed to the user; indication of the range to a target communicated to an accessory (42).

2. A firearm according to claim 1 **characterized in that** the firearm comprises an inductively powering rail (14) operatively connected to one or more batteries comprising a plurality of inductively powering rail slots (20), and powering side rail units (94) and (96) having fewer inductively rail slots (20) than the powering rail (14), the rails (14), (94) and (96) powering an accessory (42).

3. A firearm according to claim 1 or claim 2, **characterized in that** communication between the master CPU (76) and an accessory (42) is conducted through an inductive control path (92).

4. A firearm according to one of claims 2 to 3, **characterized in that** each inductively powering rail slot has a primary U-core (26) and that said accessory (42) has U cores (50) designated to mate with each primary U-core (26) to provide an inductive power connection to said accessory.

5. A firearm according to one of claims 1 to 4, **characterized in that** said firearm has a two way communication with accessory (42).

6. A method for providing data transmission to and from an accessory (42, 104) mounted on a firearm according to anyone of the preceding claims; said method comprising connecting an accessory (42, 104) to an inductively powering rail (14, 94, 96) and establishing communication with master CPU (76), said side rail units (94,96) through a communication bus communicating to determine at least one of the information data of the group comprising: consisting of: when an accessory has been connected, when it is disconnected; GPS feedback; data sent to external data transfer module (84) and displayed to the user; indication of the range to a target communicated to an accessory (42).

7. The method of claim 6 when dependent on claim 4, comprising establishing communication from each powering rail (14, 94, 96) via frequency modulation on an inductive control path (92), through the use of primary U-cores (26) and secondary U-Cores (50).

8. The method of one of claims 6 to 7 when dependent on claims 5, comprising a two way communication with the accessory (42).

9. The method of one of claims 6 to 8, comprising: communicating with an accessory utilizing different frequencies.

## Patentansprüche

1. Schusswaffe zum Übertragen von Daten zu und von einem Zubehör (42, 102, 104);
wobei die Schusswaffe eine Haupt-CPU (76) umfasst, welche mit einer induktiven Stromversorgungsschiene (14) verbunden ist, **dadurch gekennzeichnet, dass** die Haupt-CPU weiter mit einem Mikrokontroller (98) von induktiven Stromversorgungsseitenschieneneinheiten (94, 96) verbunden ist, wobei die Seitenschieneneinheiten (94, 96) mit Haupt-CPU (76) über einen Kommunikationsbus (110) kommunizieren, welcher es der Haupt-CPU (76) erlaubt, zumindest eine von den Informationsdaten aus der Gruppe, bestehend aus: wenn ein Zubehör verbunden wurde, wenn dessen Verbindung getrennt wurde; GPS-Rückmeldung; an ein externes Datenübertragungsmodul (84) gesendete und dem Benutzer angezeigte Daten; Anzeige des Bereichs bis zu einem Ziel, welches an ein Zubehör (42) kommuniziert wurde, zu bestimmen.

2. Schusswaffe nach Anspruch 1, **dadurch gekennzeichnet, dass** die Schusswaffe eine mit einer oder mehreren Batterien funktional verbundene induktive Stromversorgungsschiene (14), umfassend eine Vielzahl von induktiven Stromversorgungsschienensteckplätzen (20), und Stromversorgungsseitenschieneneinheiten (94) und (96) mit weniger induktiven Schienensteckplätzen (20) als die Stromversorgungsschiene (14) umfasst, wobei die Schienen (14), (94) und (96) ein Zubehör (42) versorgen.

3. Schusswaffe nach Anspruch 1 oder Anspruch 2, **dadurch gekennzeichnet, dass** Kommunikation zwischen der Haupt-CPU (76) und einem Zubehör (42) durch einen induktiven Steuerpfad (92) durchgeführt wird.

4. Schusswaffe nach einem der Ansprüche 2 bis 3, **dadurch gekennzeichnet, dass** jeder induktive Stromversorgungsschienensteckplatz einen primären U-Kern (26) aufweist, und dass das Zubehör (42) U-Kerne (50) aufweist, welche vorgesehen sind, um mit jedem primären U-Kern (26) zusammenzupassen, um eine induktive Stromversorgungsverbindung zu dem Zubehör bereitzustellen.

5. Schusswaffe nach einem der Ansprüche 1 bis 4, **dadurch gekennzeichnet, dass** die Schusswaffe eine Zweiwegkommunikation mit Zubehör (42) aufweist.

6. Verfahren zum Bereitstellen einer Datenübertragung zu und von einem Zubehör (42, 104), welches auf einer Schusswaffe montiert ist, nach einem der vorstehenden Ansprüche; wobei das Verfahren Verbinden eines Zubehörs (42, 104) mit einer induktiven Stromversorgungsschiene (14, 94, 96) und Herstellen von Kommunikation mit Haupt-CPU (76) umfasst, wobei die Seitenschieneneinheiten (94, 96) durch einen Kommunikationsbus kommunizieren, um zumindest eine von den Informationsdaten aus der Gruppe, umfassend: bestehend aus: wenn ein Zubehör verbunden wurde, wenn dessen Verbindung getrennt wurde; GPS-Rückmeldung; an ein externes Datenübertragungsmodul (84) gesendete und dem Benutzer angezeigte Daten; Anzeige des Bereichs bis zu einem Ziel, welches an ein Zubehör (42) kommuniziert wurde, zu bestimmen.

7. Verfahren nach Anspruch 6, wenn abhängig von Anspruch 4, umfassend Herstellen von Kommunikation von jeder Stromversorgungsschiene (14, 94, 96) über Frequenzmodulation auf einem induktiven Steuerpfad (92) durch die Verwendung von primären U-Kernen (26) und sekundären U-Kernen (50).

8. Verfahren nach einem der Ansprüche 6 bis 7, wenn abhängig von Anspruch 5, umfassend eine Zweiwegkommunikation mit dem Zubehör (42).

9. Verfahren nach einem der Ansprüche 6 bis 8, umfassend: Kommunizieren mit einem Zubehör, welches unterschiedliche Frequenzen nutzt.

## Revendications

1. Arme à feu pour transmettre des données vers et depuis un accessoire (42, 102, 104) ;
l'arme à feu comprenant une CPU maître (76) connectée à un rail d'alimentation par induction (14), **caractérisée en ce que** la CPU maître est en outre connectée à un microcontrôleur (98) d'unités de rails latéraux d'alimentation par induction (94, 96), lesdites unités de rails latéraux (94, 96) communiquant avec une CPU maître (76) par l'intermédiaire d'un bus de communication (110) permettant à la CPU maître (76) de déterminer au moins l'une des données d'information du groupe comprenant : le moment où un accessoire a été connecté, le moment où il est déconnecté ; un retour GPS ; des données envoyées à un module de transfert de données externe (84) et affichées à l'utilisateur ; une indication de la portée à une cible communiquée à un accessoire (42).

2. Arme à feu selon la revendication 1, **caractérisée en ce que** l'arme à feu comprend un rail d'alimentation par induction (14) connecté de manière fonctionnelle à une ou plusieurs batterie(s) comprenant une pluralité de fentes de rail d'alimentation par induction (20), et des unités de rails latéraux d'alimentation (94) et (96) ayant moins de fentes de rail d'induction (20) que le rail d'alimentation (14), les rails (14), (94) et (96) alimentant un accessoire (42).

3. Arme à feu selon la revendication 1 ou 2, **caractérisée en ce que** la communication entre la CPU maître (76) et un accessoire (42) est effectuée par l'intermédiaire d'un trajet de commande inductif (92).

4. Arme à feu selon l'une des revendications 2 et 3, **caractérisée en ce que** chaque fente de rail d'alimentation par induction a un noyau en U primaire (26) et **en ce que** ledit accessoire (42) a des noyaux en U (50) destinés à s'accoupler avec chaque noyau en U primaire (26) pour fournir une connexion électrique par induction audit accessoire.

5. Arme à feu selon l'une des revendications 1 à 4, **caractérisée en ce que** ladite arme à feu a une communication bidirectionnelle avec l'accessoire (42).

6. Procédé pour assurer une transmission de données vers et depuis un accessoire (42, 104) monté sur une arme à feu selon l'une quelconque des revendications précédentes ; ledit procédé comprenant le fait de connecter un accessoire (42, 104) à un rail d'alimentation par induction (14, 94, 96) et d'établir une communication avec une CPU maître (76), lesdites unités de rails latéraux (94, 96) par l'intermédiaire d'un bus de communication communiquant pour déterminer au moins l'une des données d'information du groupe comprenant : le moment où un accessoire a été connecté, le moment où il est déconnecté ; un retour GPS ; des données envoyées à un module de transfert de données externe (84) et affichées à l'utilisateur ; une indication de la portée à une cible communiquée à un accessoire (42).

7. Procédé selon la revendication 6 lorsqu'elle dépend de la revendication 4, comprenant le fait d'établir une communication à partir de chaque rail d'alimentation (14, 94, 96) via une modulation de fréquence sur un trajet de commande inductif (92), par l'utilisation de noyaux en U primaires (26) et de noyaux en U secondaires (50).

8. Procédé de l'une des revendications 6 et 7 lorsqu'elles dépendent de la revendication 5, comprenant une communication bidirectionnelle avec l'accessoire (42).

9. Procédé de l'une des revendications 6 à 8, comprenant : la communication avec un accessoire utilisant des fréquences différentes.
